# Europäisches Patentamt
# European Patent Office
# Office européen des brevets

(11) Publication number: **0 182 199**
**B1**

(12) **EUROPEAN PATENT SPECIFICATION**

(45) Date of publication of patent specification: **04.10.89**

(51) Int. Cl.⁴: **H 02 G 15/013, H 01 R 4/72**

(21) Application number: **85114091.3**

(22) Date of filing: **05.11.85**

(54) Article having heat expandable sealing member.

(30) Priority: **06.11.84 US 668740**

(43) Date of publication of application:
**28.05.86 Bulletin 86/22**

(45) Publication of the grant of the patent:
**04.10.89 Bulletin 89/40**

(84) Designated Contracting States:
**AT BE CH DE FR GB IT LI NL SE**

(56) References cited:
**EP-A-0 079 245**
**EP-A-0 120 437**
**EP-A-0 153 174**
**DE-A-2 413 623**
**FR-A-2 369 712**

(73) Proprietor: **SIGMAFORM CORPORATION**
**2401 Walsh Avenue**
**Santa Clara, CA 95051 (US)**

(72) Inventor: **Akiyama, James K.**
**873 San Ardo Way**
**Mountain View, Cal. 94043 (US)**
Inventor: **Freysing, Klaus D.**
**603 Landfair Drive**
**San Jose, Cal. 95136 (US)**
Inventor: **Young, Richard A.**
**22588 Lazy Oak Court**
**Cupertino, Cal. 95014 (US)**

(74) Representative: **Bernhardt, Klaus, Dipl.-Ing.**
**Radeckestrasse 43**
**D-8000 München 60 (DE)**

Courier Press, Leamington Spa, England.

## Description

This invention relates to a protective tubing adapted to receive a plurality of cylindrical bodies, comprising a generally axially extending outer tube having at least one open terminus and a predetermined internal volume per unit length, in which said cylindrical bodies are receivable in an axially extending, parallel fashion relative to the tubing such that said cylindrical bodies occupy a volume that is less than that of said outer tube, and at least one sealing member capable of sealing said open terminus of said outer tube when the bodies extend therethrough, and occupying a volume that is generally equal to the difference between the volumes of said outer tube and said cylindrical bodies. Such a protective tubing is disclosed in EP—A—0 120 437. In this prior known protective tubing the sealing member is a plastic filler piece for sealing wedged spaces which are present between the cylindrical bodies. This filler piece is generally rectangular in cross-section and tapering from its center to its ends. The outer tube of this prior known protective tubing is a heat shrinkable member, and it is expected that upon heating that outer tube the plastic filler piece will be softened and compressed to occupy the desired volume, i.e. fill the voids. This prior protective tubing requires not only the outer tube to be a heat shrinkable member, but it is also essential that different filler pieces are required depending on the number and intended relative orientation of the cylindrical bodies within the protective tubing.

From FR—A—2 369 712 there is known a protective tubing including a sealing member manufactured from a heat recoverable polymer. Such sealing member includes two semiconical notches which are formed during a first heating step; such notches deform and seal the protective tubing when it is heated. The difference between the volumes of the outer tube and the cylindrical bodies is filled with air and that means that in case of rupture or other accidents destroying the integrity of the outer tube corrosive materials, such as water, may enter the space and corrode the cylindrical bodies.

It is therefore the object of the invention to provide a protective tubing of the type defined initially in which the difference between the volumes of the outer tube and the cylindrical bodies is reliably filled under all circumstances.

This object is achieved, according to the invention, by making the sealing member of pre-foamed, heat expandable foam comprising a cross-linked polymer and having the characteristics of being compressible during an initial stage and expandable during a second, heating stage. Such a sealing member will reliably occupy the volume between the outer tube and the cylindrical bodies, thus sealing all possible voids and thus protect the cylindrical bodies under all circumstances.

In the prior known protective tubings the outer tube is an electrical wire conduit and the cylindrical bodies are electrical wires, this is also the presently most important application of the present invention. There is a wide selection of materials suitable as the pre-foamed, heat expandable foam.

Members of the polyolefin family, in particular polyethylene and ethylene vinyl acetate copolymer, are very suitable for the invention. Other cross-linked polymers suitable for carrying out the invention are ethylene ethyl acrylate copolymer, ethylene propylene rubber, in particular ethylene propylene dienne monomer rubber, polyvinylchloride, polyurethane and silicone rubber.

To obtain best possible protection it is preferable that the heat expandable foam sealing member comprises substantially closed cells.

In a preferred embodiment of the invention, the outer tube is a heat shrinkable tube, the heat shrinking temperature of which is such that the heat used to cause it to shrink will cause the heat expandable sealing member to expand.

The invention will be described referring to an embodiment thereof, namely an electrical wire conduit, shown in the accompanying drawing.

Brief description of the drawings

Figure 1 is a partial perspective view of the protective tubing embodying the present invention with the heat expandable foam sealing member before heating;

Figure 2 is a partial perspective view of the protective tubing with novel heat expandable foam sealing member after heating, closing the opening;

Figure 3 is an examplary cross-section view of the protective tubing embodying of the present invention with the heat expandable foam sealing member before heating; and

Figure 4 is an exemplary cross-section view of the protective tubing embodying the present invention with heat expandable foam sealing member after heating, closing the opening.

Best mode for carrying out the invention

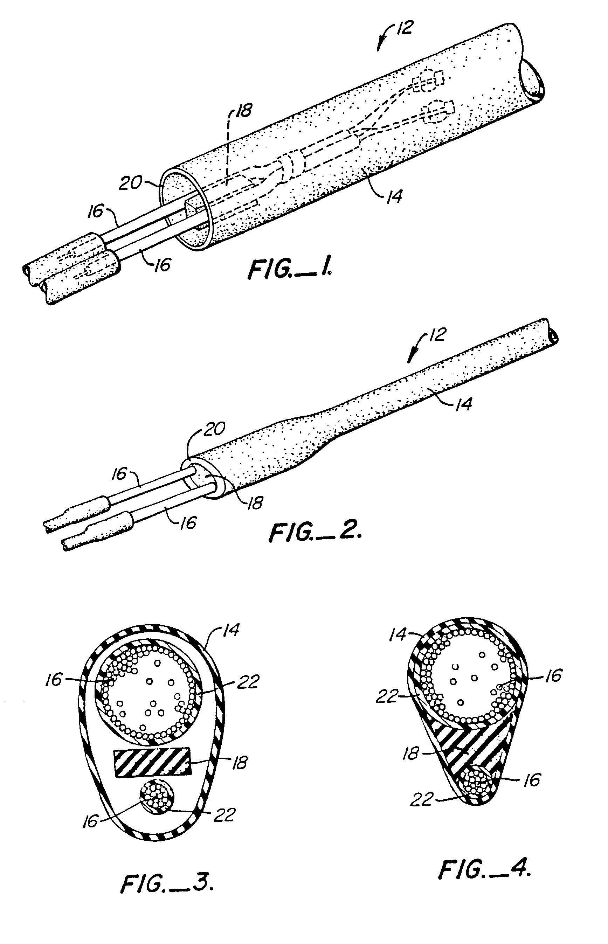

Referring to Figure 1, there is shown a protective tubing generally designated 12. Tubing 12 comprises a generally axially extending outer tube or sleeve 14 for receiving a plurality of generally axially extending electrical wires 16, and at least one heat expandable foam sealing member 18.

More particularly, outer sleeve 14 has at least one opening 20 and occupies a predetermined volume. Electrical wires 16, each of which being received in outer sleeve 14 in an axially extending, parallel fashion, occupy a volume that is less than the volume of outer sleeve 14, as best shown in Figure 3. Although outer sleeve 14 may envelop bare electrical wires 16, as shown in Figures 1 and 2, it is within the skills of those skilled in the art to envelop bundles of wires 16, as best shown in Figures 3 and 4. Each bundle of wires 16 includes an outer covering or tube 22 which is made from suitable material.

Sealing member 18, capable of sealing opening 20 of outer sleeve 14, is shown in its compressed, pre-heating condition in Figures 1 and 3. While in this condition, sealing member 18 occupies a volume that is less than the difference between the volume of outer sleeve 14 and the volume of wires 16. After heating, sealing member 18 then occupies a volume that is generally equal to the difference between the volume of outer sleeve 14 and the volume of wires 16, as best shown in Figure 4.

Although sealing member 18 in the preferred embodiment comprises a cross-linked polymer of the polyolefin family, sealing member 18 may be any cross-linked polymeric foam material that has the characteristics of being compressible during an initial stage and expandable during a second, heating stage. Sealing member 18 was first compressed and then cooled while in the compressed condition. Such compression could be in either one or two directions. If sealing member 18 was compressed in one direction, e.g., the negative X-axis direction, then expansion during heating would be in the positive X-axis direction. If compressed in both the negative X and Y-axes directions, then it would expand in the positive X and Y-axes directions. Polymers of the polyolefin family include polyethylene, ethylene vinyl acetate copolymer, ethylene ethyl acrylate copolymer, ethylene propylene rubber, and ethylene propylene dienne monomer rubber. Other material such as polyvinylchloride, polyurethane, and silicon rubber, may be used.

Sealing member 18 in the preferred embodiment also comprises substantially closed cells. Such closed cells, not shown, prevent the entry of moisture or other corrosive elements into the protective tubing 12. If sealing member 18 is made from closed cell foams, such closed cell foams may be used only after it had been stored for an extended period of time in order for it to be capable of expanding completely during the heat expansion stage. The density of foam sealing member 18 is not critical to the operation of the invention. Lower density foam naturally allow far more compression and have an higher expansion ratio, enabling such lower density foams to fill larger voids between electrical wires.

To improve the reliability of sealing member 18, sealing member 18 may be coated with a hot melt adhesive that, upon heating, will melt and bond electrical wires 16 and outer sleeve 14. Such adhesive, not shown, should have a melting temperature that is comparable to the melting temperature of foam extending member 18. Adhesive 22 may comprise polyamide, ethylene vinyl acetate, and butyl-based adhesives.

Outer sleeve 14 in the preferred embodiment comprises a conventional heat shrinkable material.

In fabricating the electrical wire conduit 12, a heat shrinkable outer sleeve 14 is selected. Outer sleeve 14 has at least one opening 20, and has a predetermined volume. Two electrical wires 16, each being 7 mm in diameter, are positioned within outer sleeve 14. A rectangular foam seal member 18, which has a dimension of 30 mm×5 mm×10 mm, is positioned between the two electrical wires 16 adjacent opening 20. An adhesive layer, not shown, is also positioned between wires 16 and outer sleeve 14, the adhesive layer being 25 mil in thickness.

Heat is then applied to electrical wire conduit 12 in a conventional manner and at conventional temperatures. Heat shrinkable outer sleeve 14 contracts toward its axis in a conventional fashion. Heat expansion foam sealing member 18 simultaneously expands to seal opening 20, as best shown in Figure 4. After heating, sealing member 18 occupies a volume that is generally equal to the difference between the outer tube volume and volume of electrical wires 16.

It will be apparent to those skilled in the art that various modifications may be made within the scope of the appended claims.

## Claims

1. Protective tubing (12) adapted to receive a plurality of cylindrical bodies (16), comprising a generally axially extending outer tube (14) having at least one open terminus (20) and a predetermined internal volume per unit length, in which said cylindrical bodies (16) are receivable in an axially extending, parallel fashion relation to the tubing such that said cylindrical bodies (16) occupy a volume that is less than that of said outer tube (14), and at least one sealing member (18), capable of sealing said open terminus (20) of said outer tube (14) when the bodies extend therethrough, and occupying a volume that is generally equal to the difference between the volumes of said outer tube (14) and said cylindrical bodies (16), characterized in that said sealing member (18) is made of pre-foamed, heat expandable foam comprising a cross-linked polymer and having the characteristics of being compressible during an initial stage and expandable during a second, heating stage.

2. Protective tubing as claimed in claim 1, wherein said outer tube is an electrical wire conduit (14), and said cylindrical bodies are electrical wires (16).

3. Protective tubing as claimed in claim 2, wherein said heat expandable foam sealing member (18) comprises a cross-linked polymer of the polyolefin family.

4. Protective tubing as claimed in claim 3, wherein said cross-linked polymer is a polyethylene polymer.

5. Protective tubing as claimed in claim 3, wherein said cross-linked polymer is an ethylene vinyl acetate polymer.

6. Protective tubing as claimed in claim 2, wherein said cross-linked polymer is an ethylene ethyl acrylate copolymer.

7. Protective tubing as claimed in claim 2, wherein said cross-linked polymer is an ethylene propylene rubber.

8. Protective tubing as claimed in claim 7, wherein said cross-linked polymer is an ethylene propylene dienne monomer rubber.

9. Protective tubing as claimed in claim 3, wherein said cross-linked polymer is a polyvinylchloride.

10. Protective tubing as claimed in claim 3, wherein said cross-linked polymer is a polyurethane polymer.

11. Protective tubing as claimed in claim 3, wherein said cross-linked polymer is a silicone rubber.

12. Protective tubing as claimed in any of the preceding claims, wherein said heat expandable foam sealing member (18) comprises substantially closed cells.

13. Protective tubing as claimed in any of the preceding claims, wherein said outer tube (14) is a heat shrinkable tube, the heat shrinking temperature of which being such that the heat used to cause it to shrink will cause said heat expandable sealing member (18) to expand.

## Patentansprüche

1. Schutzrohr (12) zur Aufnahme einer Vielzahl von zylindrischen Körpern (16), mit einem sich im wesentlichen axial erstreckenden Außenrohr (14), das wenigstens ein offenes Endstück (20) aufweist und ein vorbestimmtes Innenvolumen je Längeneinheit hat und in dem die zylindrischen Körper (16) mit axialer Ausrichtung parallel zum Rohr so aufnehmbar sind, daß die zylindrischen Körper (16) ein Volumen einnehmen, welches kleiner als das des Außenrohres (14) ist, und mit wenigstens einer Dichtung (18), die bei im Außenrohr (14) angeordneten Körpern das offene Endstück (20) desselben zu verschließen vermag und ein Volumen einnimmt, das im wesentlichen gleich ist dem Unterschied zwischen den Volumen des Außenrohrs (14) und der zylindrischen Körper (16), dadurch gekennzeichnet, daß die Dichtung (18) aus vorgeschäumtem, durch Wärmeeinwirkung expandierbarem Schaumstoff hergestellt ist, der ein vernetztes Polymer umfaßt und die Eigenschaften besitzt, während einer Anfangsphase kompressibel und während einer zweiten Phase, der Heizphase, expandierbar zu sein.

2. Schutzrohr nach Anspruch 1, bei dem das Außenrohr ein elektrischer Kabelkanal (14) ist und die zylindrischen Körper elektrische Drähte (16) sind.

3. Schutzrohr nach Anspruch 2, bei dem die Dichtung (18) aus durch Wärmeeinwirkung expandierbarem Schaumstoff ein vernetztes Polymer aus der Polyolefin-Familie umfaßt.

4. Schutzrohr nach Anspruch 3, bei dem das vernetzte Polymer ein Polyethylen-Polymer ist.

5. Schutzrohr nach Anspruch 3, bei dem das vernetzte Polymer ein Ethylen/Vinylacetat-Copolymer ist.

6. Schutzrohr nach Anspruch 2, bei dem das vernetzte Polymer ein Ethylen/Ethylacrylat-Copolymer ist.

7. Schutzrohr nach Anspruch 2, bei dem das vernetzte Polymer ein Ethylen/Propylen-Kautschuk ist.

8. Schutzrohr nach Anspruch 7, bei dem das vernetzte Polymer ein Ethylen-Propylen-Dien-Monomer-Kautschuk ist

9. Schutzrohr nach Anspruch 3, bei dem das vernetzte Polymer ein Polyvinylchlorid ist.

10. Schutzrohr nach Anspruch 3, bei dem das vernetzte Polymer ein Polyurethan-Polymer ist.

11. Schutzrohr nach Anspruch 3, bei dem das vernetzte Polymer ein Silikon-Kautschuk ist.

12. Schutzrohr nach einem der vorhergehenden Ansprüche, bei dem die Dichtung (18) aus unter Wärmeeinwirkung expandierbarem Schaumstoff im wesentlichen geschlossene Zellen aufweist.

13. Schutzrohr nach einem der vorhergehenden Ansprüche, bei dem das Außenrohr (14) ein wärmeaufschrumpfbares Rohr ist, dessen Wärmeaufschrumpf-Temperatur so ist, daß die zu seinem Aufschrumpfen angewendete Wärme das Expandieren der durch Wärmeeinwirkung expandierbaren Dichtung (18) hervorruft.

## Revendications

1. Tube de protection (12) destiné à loger plusieurs corps cylindriques (16), ledit tube comprenant un tube extérieur (14) s'étendant sensiblement axialement et ayant au moins un bout ouvert (20) et un volume intérieur prédéterminé par unité de longueur, et dans lequel les corps cylindriques (16) peuvent être logés avec une orientation axiale, parallèlement au tube, de telle manière que les corps cylindriques (16) occupent un volume inférieur à celui du tube extérieur (14), et une garniture (18) capable d'obturer le bout ouvert (20) du tube extérieur (14) quand les corps s'étendent le long de ce dernier, et d'occuper un volume sensiblement égal à la différence entre les volumes du tube extérieur (14) et des corps cylindriques (16), caractérisé en ce que la garniture (18) est réalisée en une mousse thermoexpansable, préliminairement expansée, qui comprend un polymère réticulé et possède les propriétés d'être compressible pendant une phase initiale et d'être expansable pendant une deuxième phase qui est la phase d'échauffement.

2. Tube de protection selon la revendication 1, dans lequel le tube extérieur est une conduite (14) de câbles électriques, et les corps cylindriques sont des fils électriques (16).

3. Tube de protection selon la revendication 2, dans lequel la garniture (18) en mousse thermoexpansable comprend un polymère réticulé pris dans la famille des polyoléfines.

4. Tube de protection selon la revendication 3, dans lequel le polymère réticulé est un polymère polyéthylène.

5. Tube de protection selon la revendication 3, dans lequel le polymère réticulé est un copolymère d'éthylène et d'acétate de vinyle.

6. Tube de protection selon la revendication 2, dans lequel le polymère réticulé est un copolymère d'éthylène et d'acrylate d'éthyle.

7. Tube de protection selon la revendication 2, dans lequel le polymère réticulé est un caoutchouc d'éthylènepropylène.

8. Tube de protection selon la revendication 7, dans lequel le polymère réticulé est un caoutchouc des monomères éthylène, propylène et diène.

9. Tube de protection selon la revendication 3, dans lequel le polymère réticulé est un polyvinyl-chlorure.

10. Tube de protection selon la revendication 3, dans lequel le polymère réticulé est un polymère polyuréthane.

11. Tube de protection selon la revendication 3, dans lequel le polymère réticulé est un caoutchouc silicone.

12. Tube de protection selon l'une quelconque des revendications précédentes, dans lequel la garniture (18) en mousse thermoexpansable comprend des cellules sensiblement fermées.

13. Tube de protection selon l'une quelconque des revendications précédentes, dans lequel le tube extérieur (14) est un tube thermorétrécissable dont la température de thermorétrécissement est telle que la chaleur appliquée en vue de son rétrécissement provoque l'expansion de la garniture thermoexpansable (18).

FIG.__1.

FIG.__2.

FIG.__3.

FIG.__4.